# EUROPÄISCHE PATENTANMELDUNG

(11) **EP 1 286 283 A2**
(43) Veröffentlichungstag der Anmeldung: **26.02.2003**
(21) Anmeldenummer: 01124627.9
(22) Anmeldetag: 08.10.2001
(51) Int. Cl.: G06F 17/60

(54) **Schnittstellenmodul für dokumentenbasierte elektronische Geschäftsprozesse auf Transaktionsbasis**

(30) Priorität: 13.08.2001 EP 01119457
(71) Anmelder: Indatex GmbH, 82319 Starnberg (DE)
(72) Erfinder: Altomare, Piero, 6020 Emmenbrücke (CH)
(74) Vertreter: Rupp, Christian, Dipl.Phys.

(57) **Zusammenfassung**

Ein Schnittstellenmodul dient zur Durchführung von elektronischem Geschäftsverkehr auf Transaktionsbasis. Das Schnittstellenmodul (1) ist dabei zwischen einem Terminal (4) und einem Datennetz (8), wie bspw. dem Internet geschaltet ist. Weiterhin ist ein Modul (1, 3) zur Visualisierung (14) und Überwachung des Nutzdatenflusses (5, 6) von bzw. zu dem Terminal (4) vorgesehen, wobei das Visualisierungsmodul auf Dokumentenvorlagen (12) zugreift, um die übertragenen Nutzdaten als Dokumente zu visualisieren.

Gemäß einem weiteren Aspekt ist ein Schnittstellensystem zur Verbindung ggf. heterogener Systeme über ein Datennetz vorgesehen, wobei das System Schnittstellenmodule aufweist, die die Verbindung zwischen den ggf heterogenen Systemen darstellen, und die Datenübertragung transaktionsbasiert mittels definierter sende- und empfangsseitiger Kommunikationsstati erfolgt.

Eine Schnittstelle zum Übertragen von Nutzdaten in einem Datennetz weist dabei auf:
- ein unternehmens- und/oder branchenspezifisches Konfigurierungsobjekt, das Prozessabläufe definiert,
- ein Schablonenobjekt, das Formatvorlagen für Dokumente definiert, die zur Ausführung der im Konfigurierungsobjekt definierten Geschäftsabläufe verwendet werden, und
ein Schnittstellen-Objekt, das bestimmten Prozessabläufen bestimmte Destinationen des Datennetzes als Partner des Prozessablaufs zuweist.

## Beschreibung

Die vorliegende Erfindung bezieht sich auf Schnittstellenmodule zur Ausführung dokumentenbasierter elektronischer Geschäftsprozesse auf Transaktionsbasis, auf Computer-Softwareprogramme zur Implementierung solcher Schnittstellenmodule, auf Verfahren zum Management des Nutzdatenflusses zwischen einem Terminal und einem Datennetz sowie auf ein System zur Ausführung von elektronischen Geschäftsprozessen auf Transaktionsbasis.

Die Erfindung bezieht sich allgemein auf die Durchführung von dokumentenbasierten elektronischen Geschäftsprozessen. Beispiele für derartige elektronische dokumentenbasierte Geschäftsprozesse sind die Erbringung von Finanzdienstleistungen, der Logistikbereich, etc.

Allgemein ist es heutzutage ein Problem, dass verschiedene, beispielsweise an das Internet angeschlossene Unternehmen, die E-Commerce ausführen möchten, keine einheitlichen Softwarevoraussetzungen erfüllen. Die Technologie zur Bewältigung dieser Problematik wird oft mit EDI (Electronic Data Interchange) oder elektronischer Datenaustausch bezeichnet. Darunter versteht man genauer gesagt die elektronische Übertragung von Geschäftsdaten. Ziel von EDI ist es, eine Kommunikation zu ermöglichen, mit der über Unternehmensgrenzen hinweg Geschäftsprozesse gesteuert werden. EDI soll die zahlreichen Papierdokumente wie Bestellungen, Bestätigungen, Aufträge, Rechnungen, Lieferscheine usw. ersetzen, die bei einem Geschäftsprozess anfallen. EDI steht für einen elektronischen Dokumentenaustausch mit formatierten Strukturen, der in Rechensystemen weiterverarbeitet werden kann. Die Inhalte einer EDI-Nachricht müssen so formatiert sein, dass Rechner von anderen Unternehmen diese weiterbenutzen können. Aufgrund der Verwendung standardisierter Datenformate können dabei sowohl die bei den Kommunikationspartnern eingesetzten Softwarelösungen als auch die Hardwareplattformen von unterschiedlichen Herstellern stammen. Da die Daten ausschließlich in standardisierten Formaten ausgetauscht werden, muss jedes Unternehmen lediglich einmal sein internes Format in das verwendete Standarddatenformat (z.B. EDIFACT) abbilden.

EDIFACT (Electronik Data Interchange for Administration, Commerce and Transport) ist ein internationaler, branchenübergreifender Standard für den Austausch von strukturierten elektronischen Daten zwischen DV-Anwendungen verschiedener Geschäftspartner. EDIFACT kann in allen vorhandenen Datenverarbeitungsanlagen problemlos eingesetzt werden, weil sie hersteller-, system- und übertragungsneutral ist. Unter Beibehaltung bestehender unternehmensspezifischer Dateistrukturen ermöglicht EDIFACT allen Unternehmen, den Informations- und Kapitalfluss bei der Geschäftsabwicklung zu beschleunigen und Handelsschwellen weltweit abzubauen.

Durch EDI kann der Transaktionsfluss zwischen Geschäftspartnern beschleunigt werden, indem die konventionelle papiergestützte Arbeit bei Auftragsabwicklung und Rechnungswesen ersetzt wird. Mit EDI werden Geschäftsaktivitäten automatisiert und unternehmensübergreifende Prozesse beschleunigt. Beim "Integrated EDI" sind die Applikationssysteme der beiden Kommunikationspartner miteinander verbunden. Informationen, die von einem der beiden Geschäftspartner generiert werden, gelangen in das Applikationssystem des anderen Geschäftspartners.

Die Interaktion im Rahmen von Business-to-Business- und Consumer-to-Business-Nutzungen wird als "WebEDI" bezeichnet. Kleine und mittlere Unternehmen bilden zusammen mit den Privatpersonen deshalb eine Gruppe, weil sich ihre dv-technischen Möglichkeiten entsprechen. Durch die Verwendung des Internet werden die Kommunikationsbeziehungen der Akteure gebündelt. Diese Bündelungsfunktion weist zwei Formen auf. Zum einen die Bündelung von Einzeltransaktionen zu einer Datei, zum anderen die Zusammenschaltung der Teilnehmer auf ein Anwendungssystem. Zur effizienten Nutzung seiner vorhandenen EDI-Schnittstelle stellt ein Unternehmen seinen kleinen und mittleren Geschäftspartnern auf Internetseiten "Eingabemasken" zur Verfügung. Damit haben diese Geschäftspartner die Möglichkeit, ihre Aufträge, Rechnungen oder bei ihren Kreditinstituten Überweisungen einzugeben. Bei der Eingabe können je nach Intelligenz der "Eingabemasken" semantische Prüfungen vorgenommen werden, damit nur sachlich korrekte Datensätze gespeichert werden. Die Datensätze können auf dem Webserver zwischengespeichert und daraufhin zu einem vorher festgelegten Zeitpunkt an den Empfänger übertragen werden. Der Empfänger erhält eine EDI-Datei, die er mit seiner vorhandenen EDI-Schnittstelle verarbeiten kann (batchorientierte Übermittlung). Dabei kann er sicher sein, daß alle notwendigen Angaben in den einzelnen Datensätzen vorhanden sind. Auch besteht die Möglichkeit, die Daten an den Empfänger zu versenden, sobald ein Dokument vollständig eingegeben worden ist (transaktions- oder dokumentenorientierte Übermittlung).

Eine vorteilhafte Entwicklung verspricht man sich von der Kombination von EDI mit XML. Die Extensible Markup Language (XML) ist im ECommerce-Umfeld als ein Datenformat für strukturierten Informationsaustausch zu verstehen. XML wird unter der Aufsicht des W3C weiterentwickelt und ist aus Sicht der Industrie ein Konsens für die Architektur des WWW der nächsten Generation. XML bedient sich des Konzepts von generischem Markup: Tags strukturieren ein Dokument durch die Verschachtelung von Elementen. HTML ist die populärste Ausprägung dieser Technik. Während HTML aus einer festgelegten Menge von Tags besteht, erlaubt XML die freie Definition eines Applikations-orientierten Vokabulars. Ein solches Vokabular wird durch eine "Document Type Definition" (DTD) beschrieben, einer formalen Grammatik, die Tags und strukturelle Relationen zwischen Tags beschreibt. DTDs sind erhältlich für eine riesige Anzahl von Anwendungsgebieten, u.a. für Electronic Commerce (OTP, XML-EDI, ...).

Angesichts dieser Problematik ist es Aufgabe der vorliegenden Erfindung, eine Schnittstellentechnologie bereitzustellen, die die Durchführung von dokumentenbasiertem elektronischen Geschäftsverkehr erleichtert. Insbesondere soll auch ein Dokumententransfer zwischen heterogenen Systemen ermöglicht werden. Dabei soll weiterhin das Management des Nutzdatenflusses durch eine Schnittstelle, die ein Unternehmensterminal mit einem Datennetz (Internet) und somit mit weiteren gleichartigen Schnittstellen verbindet, verbessert werden.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der vorliegenden Erfindung ist ein Schnittstellenmodul zur Durchführung von elektronischem Geschäftsverkehr auf Transaktionsbasis vorgesehen. Das Schnittstellenmodul ist dabei zwischen ein Terminal, beispielsweise eines Unternehmens, und einem Datennetz, beispielsweise dem Internet, geschaltet. Das Schnittstellenmodul weist wiederum ein Modul zur Visualisierung und Überwachung des Nutzdatenflusses von bzw. zu dem Terminal auf. Diese Visualisierung und Überwachung erfolgt dabei erfindungsgemäß auf Dokumentenbasis.

Die ausgetauschten Nutzdaten sind beispielsweise mittels einer Interpreter-Anwendung als Dokument auf einem Monitor darstellbar.

Weiterhin sind Mittel zur manuellen und/oder automatischen Freigabe und/oder Selektion der Übertragung von visualisierten Nutzdaten zu bzw. von dem Terminal vorgesehen.

Schließlich sind Mittel zur Selektion von zu übertragenden Nutzdaten für eine folgende Übergabe zu dem Terminal und/oder eine Adresse in dem Datennetz vorgesehen.

Die Selektion kann anhand einer Visualisierung der zu übertragenden Nutzdaten als Dokument erfolgen.

Das Schnittstellenmodul kann ausgehend von einer zentralen Intelligenz (Master Server) in dem Datennetz konfigurierbar sein, die bspw. ein Internet-Plattformserver sein kann.

Das Schnittstellenmodul kann ein Dateisystem aufweisen, in dem ein Workflow eines Geschäftsprozesses, der mittels eines Nutzdatenaustauschs über das Schnittstellenmodul abgewickelt werden soll, mittels Dokumentenvorlagen abgebildet ist.

Die Dokumentenvorlagen können von einer zentralen Intelligenz (Master Server) in den Datennetz aus in das Dateisystem des Schnittstellenmoduls eingegeben bzw. dort modifiziert werden.

Bei einer Änderung der Konfiguration des Schnittstellenmoduls können automatisch Parameter von davon betroffenen Prozessen des mittels Dokumentenvorlagen abgebildeten Workflows angepasst werden.

Die Dokumentenvorlagen und/oder ein vollständiger Workflow kann mittels einer Mappingeinheit ("Kreuzschiene") in einer Datenbank mit vorbestimmten Destinationen in dem Datennetz koppelbar sein.

Die vorliegende Erfindung bezieht sich weiterhin auf ein Computer-Softwareprogramm zur Implementierung eines solchen Schnittstellenmoduls.

Gemäß einem weiteren Aspekt der vorliegenden Erfindung ist ein Verfahren zur Durchführung von elektronischem Geschäftsverkehr auf Transaktionsbasis vorgesehen. Dabei ist ein Schnittstellenmodul zwischen ein Terminal beispielsweise eines Unternehmens, das E-Commerce ausführen möchte, und einem Datennetz wie beispielsweise dem Internet geschaltet. Dabei erfolgt erfindungsgemäß auf Dokumentenbasis eine Visualisierung und Überwachung des Nutzdatenflusses von bzw. zu dem Terminal.

Die ausgetauschten Nutzdaten können auf einem Monitor mittels einer Interpreter-Anwendung als Dokument dargestellt werden.

Die Übertragung von visualisierten Nutzdaten kann manuell und/oder automatisch freigegeben und/oder selektiert werden.

Insbesondere können zu übertragende Nutzdaten für eine folgende Übergabe selektiert werden. Diese Selektion kann anhand einer Visualisierung der zu übertragenden Nutzdaten als Dokument erfolgen.

Das Schnittstellenmodul kann ausgehend von einer zentralen Intelligenz in dem Datennetz konfiguriert werden. Ein Workflow eines Geschäftsprozesses, der mittels Nutzdatenaustausch über das Schnittstellenmodul abgewickelt werden soll, kann mittels Schablonen in einem Dateisystem abgebildet werden.

Die Dokumentenvorlagen können von einer zentralen Intelligenz (Master-Server) von dem Datennetz aus in das Dateisystem eingegeben und gegebenenfalls dort modifiziert werden.

Bei der Änderung der Konfiguration des Schnittstellenmoduls (beispielsweise Änderung der Zugangsberechtigung) können automatisch Parameter von davon betroffenen Prozessen des mittels Dokumentenvorlagen abgebildeten Workflows angepasst werden.

Die Dokumentenvorlagen und/oder ein vollständiger Workflow können mittels eines Mappingeinheit (Kreuzschiene) mit vorbestimmten Destinationen in dem Datennetz gekoppelt werden.

Erfindungsgemäß ist weiterhin ein Computer-Softwareprogramm zur Implementierung eines solchen Verfahrens vorgesehen.

Gemäß einem weiteren Aspekt der vorliegenden Erfindung ist ein Schnittstellenmodul zum Visualisieren des Datenflusses zwischen einem Terminal und einem Datennetz, beispielsweise dem Internet, vorgesehen. Das Schnittstellenmodul weist dabei eine Monitoring-Ebene zur Visualisierung und Überwachung des Nutzdatenflusses von bzw. zu dem Terminal auf. Eine Logikebene dient zur Interpretation, Konvertierung und Übergabe von Daten zum Terminal und/oder Datennetz. In einer Dateiebene sind Schablonen (Templates) abgelegt, wobei eine Interpreter-Anwendung ein- und/oder ausgehende Nutzdaten der Logikebene mittels dieser Schablonen für die Visualisierung der Nutzdaten in Form von Dokumenten bearbeitet.

Erfindungsgemäß ist weiterhin ein Schnittstellenmodul zum Visualisieren des Datenflusses zwischen einem Terminal und einem Datennetz, wie beispielsweise dem Internet, vorgesehen. Eine Präsentationsschicht dient dabei zur Erzeugung und Darstellung voreingestellter Dokumentenansichten auf der Grundlage von Nutzdaten, die mittels der Schnittstelle übergeben werden sollen. Eine Business-Schicht dient zur Steuerung von Sende- und Empfangsprozessen von Nutzdaten. Eine Dateischicht schließlich dient zur Kontrolle von Zugriffen auf eine Datenbank, in der Nutzdaten abgelegt sind.

Die Business-Schicht kann weiterhin einen Workflow mittels einer vorgegebenen Dokumentenabfolge erzeugen.

Es kann die Möglichkeit einer Fernwartung des Schnittstellenmoduls mittels Zugriff auf die Business-Schicht vorgesehen sein.

Die Business-Schicht kann weiterhin eine Datenkonvertierungsfunktion aufweisen.

Die Business-Schicht kann die Funktion einer Benutzer-Zugriffssteuerung aufweisen.

Die Dateiebene kann eine Funktion zur Unterscheidung von Prozess-Nutzdaten, Datenhaltungen und Konfigurationsdaten aufweisen.

Das Schnittstellenmodul kann mit einer Datenbank verbunden sein, in der Nutzdaten abgelegt sind.

Weiterhin kann das Schnittstellenmodul mit einer Datenbank verbunden sein, in der Schablonen mittels einer Mappingeinheit (Kreuzschiene) mit vorbestimmten Destinationen in dem Datennetz gekoppelt sind.

Gemäß einem noch weiteren Aspekt der vorliegenden Erfindung ist ein System zur Durchführung von auf Dokumentenaustausch basierten elektronischen Geschäftsprozessen vorgesehen. Das System weist dabei wenigstens zwei Schnittstellen der oben genannten Art auf, die mittels eines Datennetzes miteinander kommunizieren. Anfragen, Auftragsbestätigungen, Lieferscheine, Rechnungen, etc. können somit als rein elektronische Meldung vom einer zur anderen Schnittstelle übermittelt werden.

Gemäß einem noch weiteren Aspekt der vorliegenden Erfindung schließlich ist ein Verfahren zur Visualisierung des Datenflusses zwischen einem Terminal und einem Datennetz, beispielsweise dem Internet, vorgesehen. Dabei erfolgt eine Interpretation, Konvertierung und Übergabe von Nutzdaten zum Terminal und Datennetz. Weiterhin erfolgt eine Verarbeitung der ein- und/oder ausgehenden Nutzdaten mittels Schablonen, die in einem Dateisystem abgelegt sind, für die Visualisierung der Nutzdaten in Form von Dokumenten.

Schließlich weist ein Schnittstellensystem zur Verbindung ggf. heterogener Systeme über ein Datennetz Schnittstellenmodule auf, die die Verbindung zwischen den ggf. heterogenen Systemen darstellen. Die Datenübertragung erfolg transaktionsbasiert mittels definierter sende- und empfangsseitiger Kommunikationsstati.

Daten werden nur dann in das Empfänger-System übernommen, wenn sämtliche Daten einer Transaktion als fehlerfrei erkannt wurden.

Bei einem Verfahren zur Verbindung ggf. heterogener Systeme über ein Datennetz mittels Schnittstellenmodulen, die die Verbindung zwischen den ggf. heterogenen Systemen darstellen, wird die Datenübertragung transaktionsbasiert mittels definierter sende- und empfangsseitiger Kommunikationsstati ausgeführt.

Daten werden nur dann in das Empfänger-System übernommen, wenn sämtliche Daten einer Transaktion als fehlerfrei erkannt wurden.

Eine Schnittstelle zum Übertragen von Nutzdaten in einem Datennetz weist auf
- ein unternehmens- und/oder branchenspezifisches Konfigurierungsobjekt, das Prozessabläufe definiert,
- ein Schablonenobjekt, das Formatvorlagen für Dokumente definiert, die zur Ausführung der im Konfigurierungsobjekt definierten Geschäftsabläufe verwendet werden, und
- ein Schnittstellen-Objekt, das bestimmten Prozessabläufen bestimmte Destinationen des Datennetzes als Partner des Prozessablaufs zuweist.

Mittels des Konfigurierungsobjekts werden dabei Waren/Dienstleistungen, Dokumentvorlagen, Produkte, Kunden und Lieferanten miteinander verknüpft.

Das Konfigurierungsobjekt definiert, welcher Kunde welches Produkt handhaben darf.

Die Formatvorlagen weisen Platzhalter für mögliche Nutzdaten auf.

Wenn es ein Geschäftsablauf bedarf, sind Formatvorlagen durch dynamische Nachladen erweiterbar.

Ein objektorientiertes Verfahren zum Übertragen von Nutzdaten in einem Datennetz weist die folgenden Schritte auf:
- Definition von Prozessabläufen mittels eines unternehmens- und/oder branchenspezifisches Konfigurierungsobjekt,
- Definition von Formatvorlagen mittels eines Schablonenobjekts, wobei die Formatvorlagen zur Ausführung der im Konfigurierungsobjekt definierten Geschäftsabläufe verwendet werden, und
- Zuweisung von bestimmten Destinationen des Datennetzes als Partner des Prozessablaufs mittels eines Schnittstellenobjekts.

Weitere Merkmale, Vorteile und Eigenschaften der vorliegenden Erfindung werden aus der nunmehr folgenden detaillierten Beschreibung von Ausführungsbeispielen und bezugnehmend auf die Figuren der begleitenden Zeichnungen näher ersichtlich.
Figur 1 zeigt schematisch die Stellung eines erfindungsgemäßen Schnittstellenmoduls in einem Datennetzsystem zur Ausführung von dokumentenbasiertem elektronischen Geschäftsverkehr auf Transaktionsbasis,
Figur 2 zeigt eine genauere Ansicht der internen Struktur des Schnittstellenmoduls,
Figur 3 zeigt einen Ablauf zur Visualisierung und Selektion von Übertragungsdaten gemäß der vorliegenden Erfindung
Figur 4 zeigt die Anbindung eines Schnittstellenmoduls an einen zentralen Portalserver,
Figur 5 zeigt einen informationstechnischen Ablauf des erfindungsgemäßen Schnittstellenmoduls,
Figur 6 zeigt einen Workflow bezüglich der Visualisierung des Datentransfers durch ein erfindungsgemäßes Schnittstellenmodul,
Figur 7 zeigt die Konfiguration/Update von erfindungsgemäßen Schnittstellenmodulen mittels einer zentralen Intelligenz im Datennetz,
Figur 8 zeigt, wie mittels einer Mappingeinheit (Kreuzschiene) verschiedene Dokumentenvorlagen mit vorbestimmten Destinationen im Datennetz verbindbar sind,
Figur 9 zeigt ein transaktionsbasiertes Übertragungssystem zur Verbindung ggf. heterogener Systeme gemäß der vorliegende Erfindung,
Fig. 10 zeigt eine schematische, objektorientierte Darstellung von Elementen der Datenbankschicht von Figur 5, und
Figur 11 zeigt die interne Struktur eines Schnittstellenmoduls, aus der die Dokumentenverwaltung hervorgeht.

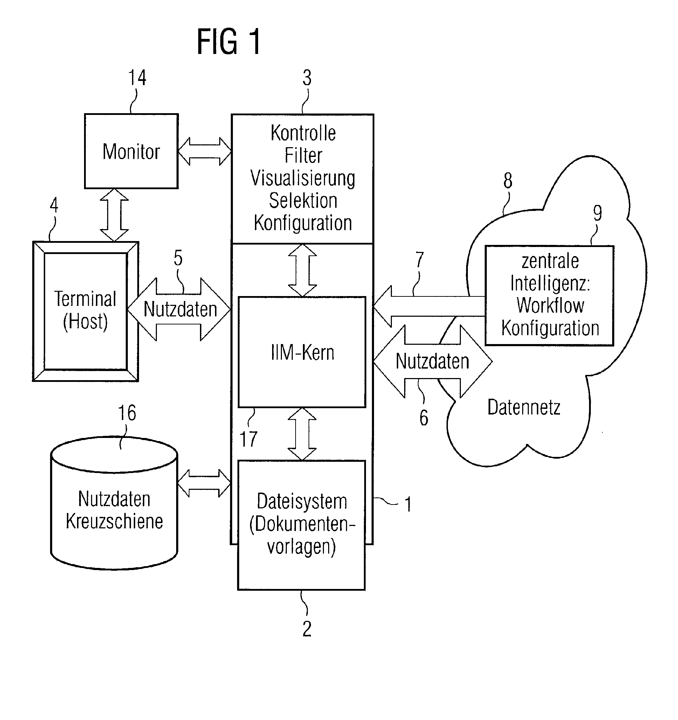

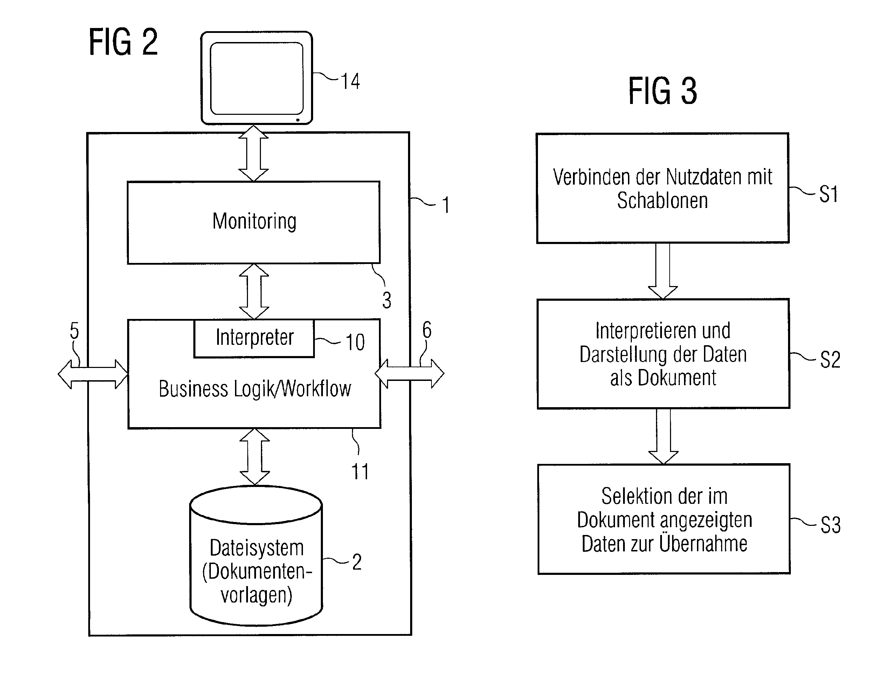

Bezugnehmend auf Figuren 1 und 2 soll zuerst die Stellung des erfindungsgemäßen Schnittstellenmoduls (IIM) 1 in einem System zur Ausführung von dokumentenbasierten, elektronischen Geschäftsverkehr erläutert werden. Das Schnittstellenmodul 1 ist zwischen einem Terminal (Host) 4, beispielsweise eines Unternehmens, und einem Datennetz 8, beispielsweise dem Internet, geschaltet. Mittels des Datennetzes 8 können insbesondere Nutzdaten 6 übermittelt werden. Weiterhin kann das Schnittstellenmodul 1 Nutzdaten 5 zu einem Speicher des Terminals 4 hin übertragen. Die Nutzdaten 5 können dabei bspw. gemäß dem XML-Format übertragen werden.

Das Schnittstellenmodul 1 ist konfigurierbar, und zwar durch insgesamt drei verschiedene Wege:
- Wie dargestellt können Konfigurationsdaten von einer zentralen Intelligenz 9 im Datennetz 8 her übertragen werden, so dass zentral eine Konfigurations- bzw. Workflow-Änderung in dem Schnittstellenmodul 1 ausgerührt werden kann.
- Die zentrale Intelligenz 9 kann auch ein weiteres Schnittstellenmodul sein, das mittels des Datennetzes 8 mit dem dargestellten ersten Schnittstellenmodul 1 verbunden ist. Somit können beispielsweise Geschäftspartner, die derartige Schnittstellenmodul 1 aufweisen, Konfigurationsdaten, wie beispielsweise Dokumentenvorlagen, miteinander austauschen bzw. modifizieren.
- Eine weitere Konfigurationsmöglichkeit besteht schließlich darin, dass das Schnittstellenmodul 1 vor Ort selbst konfiguriert wird.

Das Schnittstellenmodul 1 weist ein Dateisystem 2 auf, in dem Schablonen ("Templates") 12, beispielsweise gemäß dem PDF-Format abgelegt sind.

Durch Verbindung von Schablonen 2 mit Nutzdaten 6 ermöglicht ein Kontroll/Filter/Visualisierungs/Selektions/Konfigurationsmodul 3 die Darstellung der übertragenen Nutzdaten 6 als Dokumente beispielsweise auf einem Monitor 14.

Die Verbindung zwischen dem Kontroll-/Filter-/Visualisierungs-/Selektions-/Konfigurationsmodul 3 und dme Dateisystem 2 erfolgt dabei mittels eines sogenannten IIM-Kerns 17.

In einer Datenbank 16 kann eine Mappingeinheit ("Kreuzschiene") 16 vorhanden sein, die vorbestimmte Destinationen in dem Datennetz 8 bestimmten Schablonen (Templates) 2 zuordnet.

Die Erfindung basiert dabei auf dem Konzept der parallelen Datenhaltung. Die Nutzdaten werden vor Ort im Schnittstellenmodul 1 gepflegt und mit einer Datenbank, bspw. auf der zentralen Intelligenz (Portalserver) 9 abgeglichen. Dies hat den Vorteil, dass die Daten auf dem Portalserver 9 für weitere Dienstleistungen genutzt werden können.

Bezugnehmend auf Figur 3 soll nunmehr der Ablauf zur Visualisierung und Selektion von übertragenen Nutzdaten gemäß der vorliegenden Erfindung näher erläutert werden. In einem Schritt S1 werden zur Erstellung eines Dokuments übertragene bzw. zur Übertragung anstehende Nutzdaten mit Schablonen (Templates) verbunden. In einem Schritts S2 werden die Daten bspw. mittels PDF interpretiert und als Dokument dargestellt. In einem Schritt S3 schließlich können alle oder auch nur selektierte Nutzdaten des dargestellten Dokuments (im Falle von empfangenen Nutzdaten) übernommen bzw. (im Falle von zu übertragenden Daten) abgesandt werden. Diese Freigabe der Datenübertragung bzw. Datenübernahme, ggf. nach einer Selektion, erfolgt also anhand eienr Visualisierung der Nutzdaten in Dokumentenform.

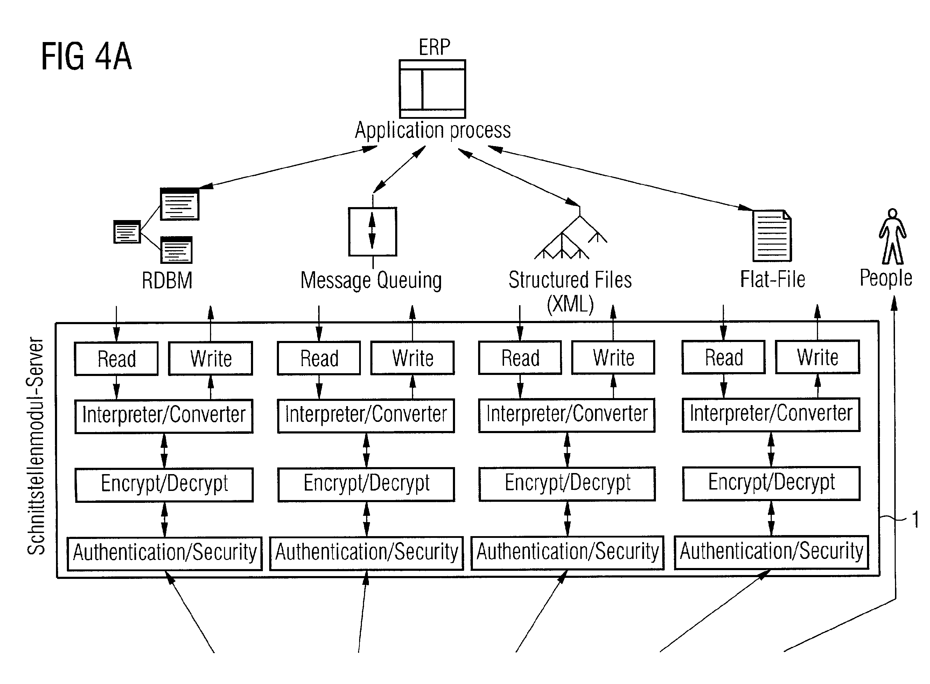

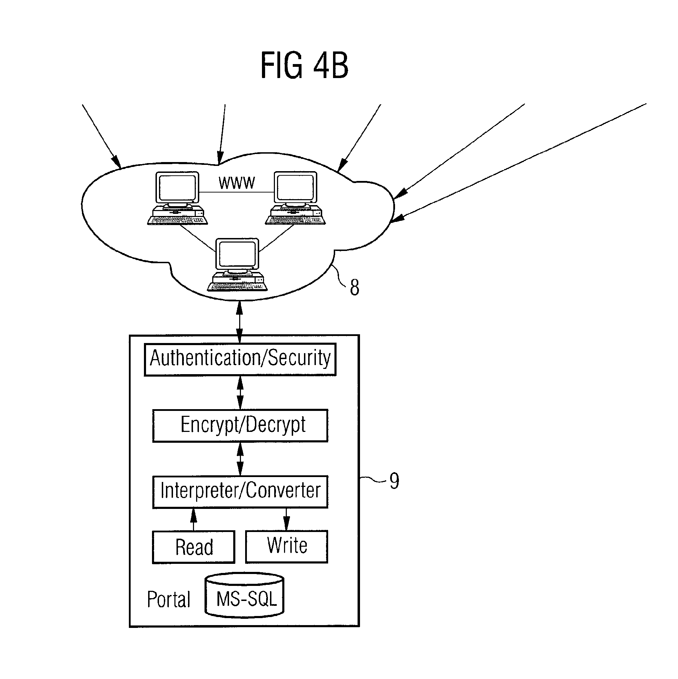

Folgende Funktionalitäten sind u.a. in dem erfindungsgemäßen Schnittstellenmodul (IIM) 1 implementiert, wie schematisch in Figur 4 dargestellt ist:
- Lesen (Read)
- Schreiben (Write)
- Interpretieren (Interpreter)
- Konvertieren (Converter)
- Plausibilisieren
- Speichern der Daten
- Authentisierung (Authentication)
- Verschlüsseln (Encrypt)
- Komprimieren
- Senden
- Empfangen

Nun erfolgt eine kurze Beschreibung dieser Funktionen:
- Lesen (Read)
   Je nach Datenstruktur, werden die Daten mit Hilfe einer Steuerdatei, Schnittstelle (ODBC) oder DTD aus dem Input File ausgelesen.
- Schreiben (Write)
   Stellt die Daten, in einem für das Fremdsystem leserlichen Format, zur Verfügung.
- Interpretieren (Interpreter)
   Interpretiert die gelesenen Daten und schreibt sie in die SQL Datenbank.
- Converter
   Liest die Daten aus der SQL Datenbank und bereitet sie für den Schreibvorgang vor.
- Plausibilisieren (kundenspezifische Einstellungen)
   Die erfassten Daten können kundenspezifisch plausibilisiert werden. Dabei stehen folgende Möglichkeiten zur Verfügung:
   - Wertebereich (vom - bis)
   - Bedingungen
   - Muss-Felder
- Speichern der Daten
   Alle Transaktionen werden laufend protokolliert und für eine spätere Verfolgung sichtbar gemacht.
- Authentisierung)
   Die Authentisierung, basiert auf einem Sicherheitskonzept mit SmartCard. Auf dem Portal werden die Benutzerdaten einem LDAP-Server verifiziert (LDAP (Lightweight Directory Access Protocol) ist ein standardisierter Directory Service (Verzeichnisdienst) auf der Basis von TCP/IP). Falls der Username und das Passwort korrekt ist, wird ein zusätzlicher Schlüssel für den Datentransfer generiert. Falls nicht, wird der Benutzer abgewiesen.
- Verschlüsseln/Entschlüsseln
   Für die Übermittlung der Daten wird ein synchroner Schlüssel erstellt. Ab diesem Zeitpunkt findet die Kommunikation über ein Triple DES Verschlüsselungsverfahren statt (Triple DES ist ein symmetrisches Verschlüsselungsverfahren, das auf dem klassischen DES basiert, jedoch mit der doppelten Schlüssellänge arbeitet (112 Bit). Die zu verschlüsselnden Daten werden mit einer dreifachen Kombination des klassischen DES verschlüsselt).
- Komprimieren
   Bevor die Datenpakete übermittelt werden, werden sie komprimiert um die Übertragung zu beschleunigen.
- Senden
   Die verschlüsselten und komprimierten Daten werden direkt oder über das Portal dem Empfänger geschickt. Die Daten werden dabei mit einem Status versehen.
- Empfangen
   Die Datenpakete werden entgegengenommen und dem Kommunikationspartner eine Empfangsbestätigung geschickt.

Die Erfindung basiert auf einem Component Object Model (COM), das sich für die Entwicklung komponentenbasierter Software und somit des Schnittstellenmoduls 1 eignet. Das Component Object Model (COM) wurde 1993 von Microsoft eingeführt. Kurz darauf wurde COM um die Fähigkeit von verteilten Objekten erweitert: Distributed COM (DCOM) erlaubt es, Komponenten auf verschiedene Rechner im Netzwerk zu verteilen.

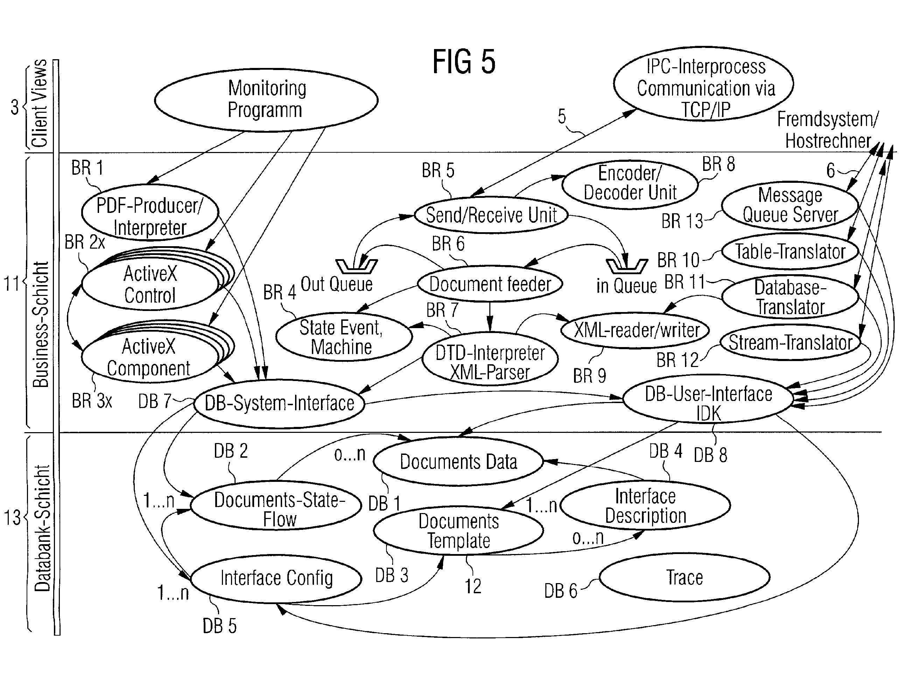

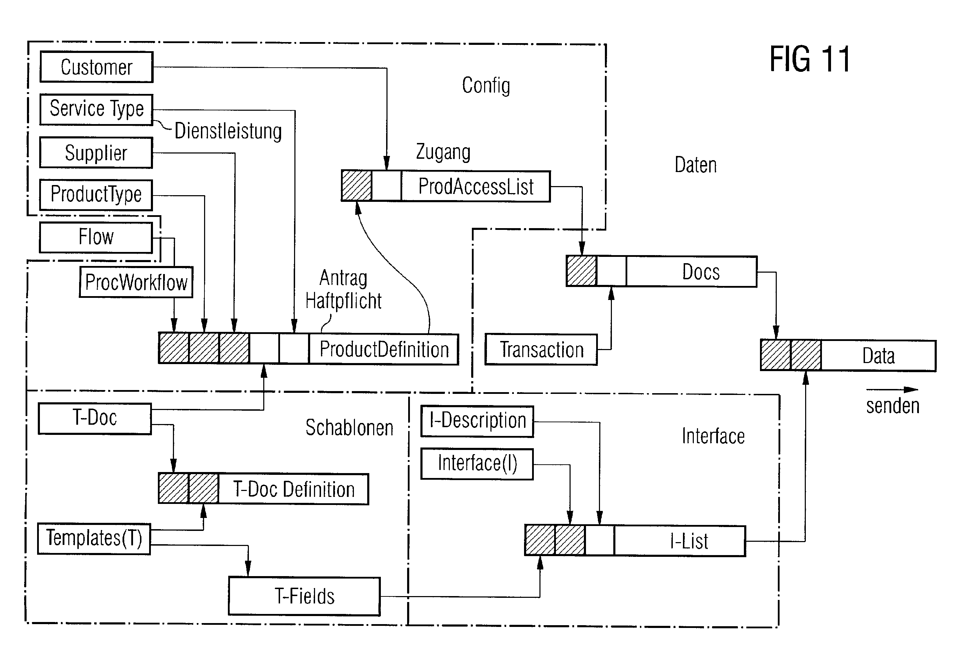

Bei der dreischichtigen Systemarchitektur gemäß der vorliegenden Erfindung sind die Geschäftsprozesse ("Business Rules") in die mittlere Geschäftsregel-Schicht (11 in Fig. 5) verlagert. Die Clientschicht (3 in Figur 5) kann schlank gehalten werden, da sie nur eine Art Benutzeroberfläche verwaltet. Das Entwicklungskonzept des IIM 1 baut zwar auf einer "3 Schicht Systemarchitektur" auf, kann aber zu n Schichten erweitert werden. Mit der Erweiterung zur n-Schichten Architektur werden die Komponenten der Business-Schicht 11 auf mehrere Rechner verteilt. Damit erreicht man eine bessere Lastverteilung und somit eine Performancesteigerung. Der IIM 1 setzt sich wie in Figur 5 gezeigt aus folgenden Schichten zusammen:
- Präsentationsschicht (Clientschicht)3:
   - Erzeugt voreingestellte Ansichten, z.B. mittels ActiveX (Active-X ist System-Interface der Firma Microsoft)
   - Gibt die Möglichkeit der Fernwartung des Schnittstellenmoduls 1 durch Zugriff auf die Business-Schicht 11
- Business(Geschäftsregel)-Schicht 11:
   - Kontrolle über sämtliche Sende- und Empfangsprozesse,
   - steuert die Daten sowie den Dokumentenfluss (Workflow),
   - ist verantwortlich für die richtige Datenumsetzung (Fremdsystem / Hostrechner),
   - erlaubt Transaktionsbehandlung,
   - kontrolliert Konfigurationsänderungen,
   - ermöglicht eine Benutzer-Zugriffssteuerung.
- Datenbankschicht 13 (siehe im Detail Figuren 11, 12)
   - kontrolliert sämtliche Datenbankzugriffe (Read, Write and New),
   - unterscheidet zwischen Nutzdaten (Prozessdaten), Datenhaltung und Konfigurationsdaten.

Das Schnittstellenmodul 1 weist folgende Untermodule auf:
A. IIM-Kern (17 in Figur 1) (Serverseitig, optional auch clientseitig):
   Enthält das generisches Mapping und den generischen Workflow.
   Kontrolliert sämtliche Transaktionen, Datenbewegungen und deren Zugriffsberechtigungen.
B. IIB: IIM-Konfigurationsprogramm 3:
   Mit diesem Programm wird ohne Programmierkenntnisse der Datenaustausch, der ganze Workflow sowie deren Plausibilisierungen für das IIM festgelegt
C. IMP (Monitoring Programm.): IIM-Benutzeroberfläche für Visualisierungs- und Administrationszwecke.
D.IDK (Development Kit): Entwicklungs-Umgebung, mit der durch das Aufrufen von einfachen Funktion das IIM gesteuert und konfiguriert werden kann (z.B. Daten ins IIM Exportieren -> initWorkList, initExport und Save).

Das IIB-Modul 3 fügt auf einem bestehenden PDF-Dokument sogenannte ActiveX-Steuerelemente (Controls) ein. Die Controls dienen dazu, das PDFDokument mit Werten zu füllen. Der Vorteil dieses Verfahrens liegt darin, dass ein User sich mit einem Produkt auseinandersetzt, mit dem er schon lange Erfahrungen gesammelt hat. Er kennt bspw. PDF- Verträge bereits in Papierform und braucht keine besonderen Kenntnisse eines Programms zu erlernen. In einem weiteren Fall, so zum Beispiel wenn ein Makler (als Beispiel für einen User) schon bereits mit einem Maklerprogramm arbeitet, kann er sich die von ihm ausgefüllten Daten vor dem Versenden nochmals mittels der Präsentationsschicht 3 in PDF-Form veranschaulichen.

Jedes PDF-Dokument wird in der Datenbankschicht 13 als Schablone (Template) 12 hinterlegt. Mittels der Templates werden Regeln zur Interpretation der Nutzdaten, bspw. im XML-Format hinterlegt. Durch diese Regeln wird die (automatisierte) Verarbeitung von Transaktionen ermöglicht (was unter anderem auch die Präsentation beinhalten kann).

Ein Dokument setzt sich somit aus Nutzdaten (bspw. XML-Daten) und Schablone zusammen, wie im Detail später bezugnehmend auf Figur 11 erläutert werden wird. Die eigentlichen Felder einer Schablone werden in der Dateischicht 13 verwaltet und gepflegt.

In dem Dateisystem 2 kann unter Zuhilfenahme eines sogenannten "Builders" Intelligenz hinterlegt werden. Diese sieht so aus, dass zum Beispiel einem Feld ein Wertebereich (Range) zugeteilt. Beim Unter- beziehungsweise Überschreiten dieses Wertebereichs wird gibt es eine Fehlermeldung, die den Benutzer darauf hinweist, diesen Wert zu ändern. Es können aber auch Verknüpfungen von Schablonen-Feldern hinterlegt werden.

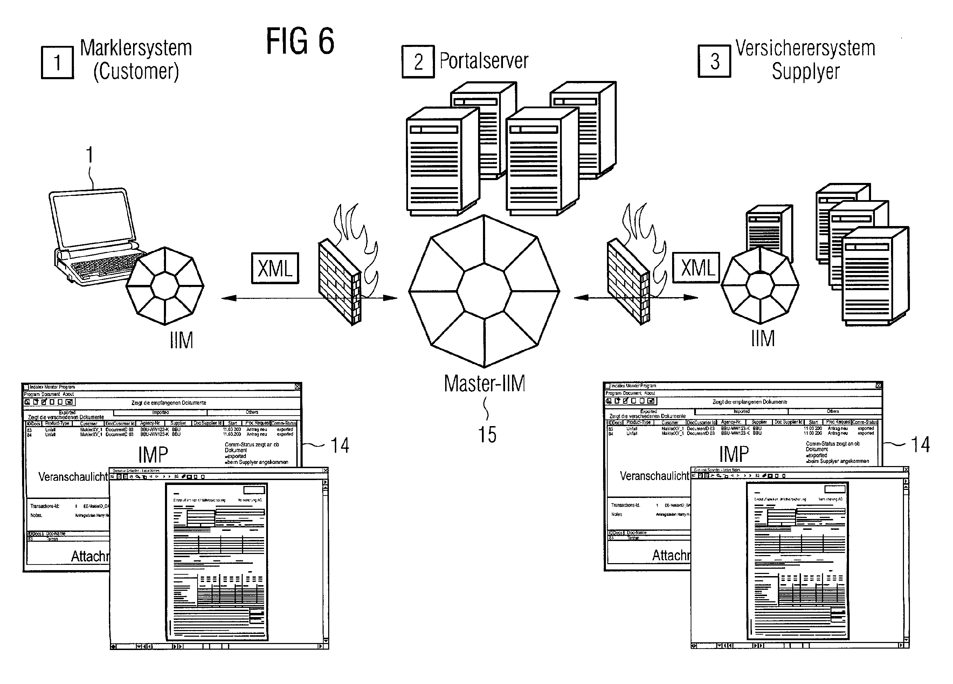

Anhand von Figur 6 wird die Erfindung nunmehr angewendet auf ein DV-System eines Versicherungsmaklers erläutert:

Das IIM 1 ist die Schnittstelle zu einem Maklerverwaltungsprogramm (MVP). Das IIM 1 liest sämtliche definierten Daten aus dem MVP aus. Im IIM 1 sind für jeden definierten Prozess Workflow-Schablonen hinterlegt. Diese Schablonen können einzeln aufgerufen werden und werden über das IMP visualisiert.
Im Workflowdokument, wo Plausibilisierungen definiert sind (z.B. Mussfelder) können Ergänzungen vorgenommen werden, d.h. es können weitere Daten ergänzt werden. Somit ist es nicht erforderlich, dass zwischen zwei kommunizierenden DV Systemen Datenkonformität besteht. Beispiel: Ein Versicherer (als Beispiel für einen Supplier) definiert die für einen bestimmten Prozess erforderlichen Daten. Diese werden über ein Workflowdokument/ Workflowvorlage visualisiert. Der Makler (Customer) überträgt die Daten, die er bereits in seinem System gespeichert hat, in das Workflowdokument. Erfordern die im Workflowdokument definierten Plausibilitäten mehr Daten, als der Makler in seinem System gespeichert hat, kann er diese ergänzen.

Die Daten werden durch das IIM 1 in ein XML Format verpackt (konvertiert). Sie können im IIM 1 zwischengespeichert und zu jedem beliebigen Zeitpunkt an den Plattformserver 8 (zentrale Intelligenz) gesendet werden.

Der Makler sieht, welche Prozessdaten versendet und welche empfangen wurden.

Empfangene Daten können vor der Übernahme in das eigene System visualisiert werden. Die Übernahme der Daten kann definiert werden als Einzelübernahme oder routinemäßiger Batchlauf.

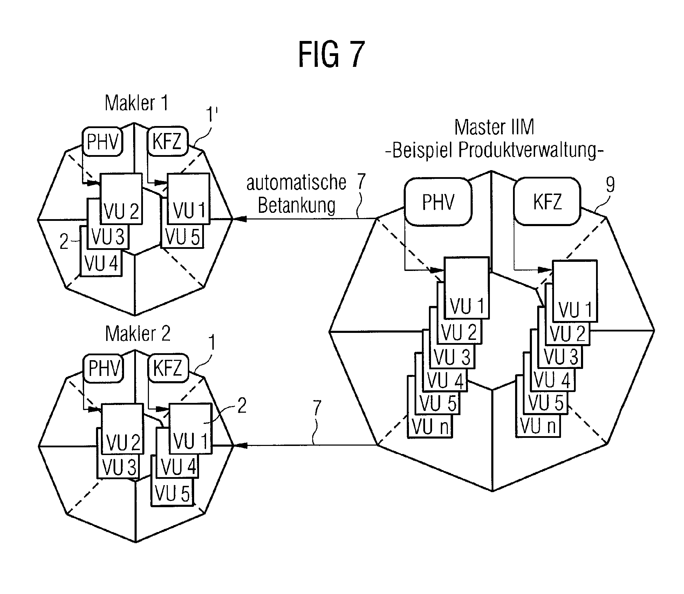

Nunmehr wird auf Figur 7 Bezug genommen. Gemäß diesem Beispiel findet die komplette Produkt- und Benutzerverwaltung auf einem Portalserver statt. Insbesondere bei einer direkten Kommunikation zwischen zwei Schnittstellenmodulen findet die Produkt- und Benutzerverwaltung dagegen alternativ oder zusätzlich in den Schnittstellenmodulen selbst statt (siehe Figuren 11, 12):
- Lieferanten (Supplier)
- Kunden (Customer)
- Workflowdokumente (Produkte) der Supplier
- alle Dokumentenstati
- der Portalserver (Master-IIM) 9 weiß, welche Dokumente(Vorlagen und Produkte) in den jeweiligen Supplier- und Customer IIM gespeichert bzw. vorgehalten werden.
- Der Master-IIM 9 kann eine automatische "Betankung", also die Übermittlung von Workflow-Dokumenten zu den Supplier- und Customer IIM 1 durchführen.
- Die Kommunikation zwischen Master-IIM 9 und den Supplier- und Customer IIMs findet unter Nutzung eines Sicherheitssystems statt. Eine Authentifizierung erfolgt mittels Smart-Card und Triple DES - Verschlüsselung.

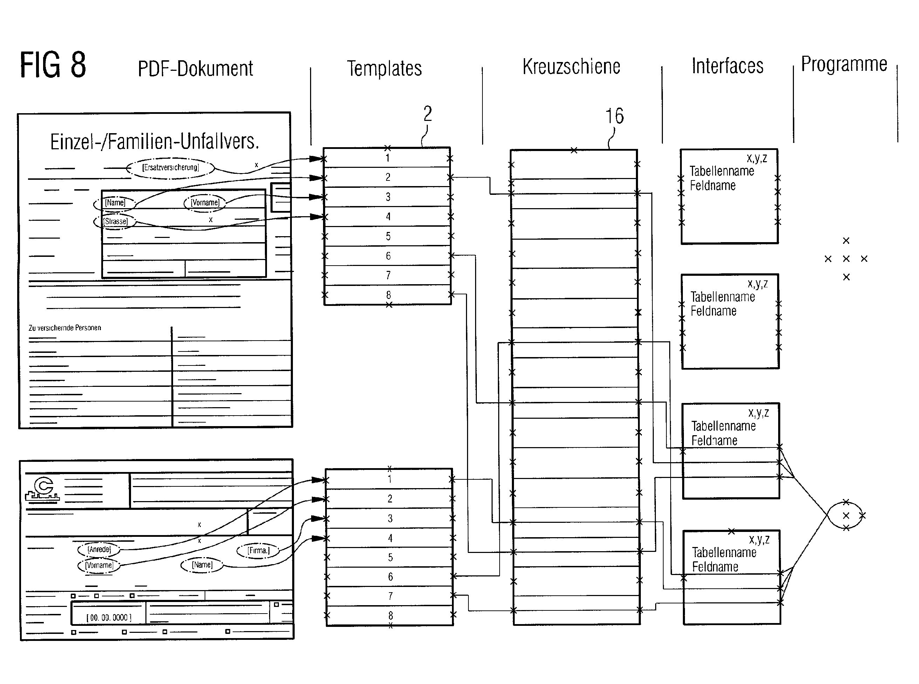

Figur 8 zeigt eine sogenannte Kreuzschiene 16, die in einer Datenbank, bspw. auf dem Portalserver 9 abgelegt sein kann. Schablonen (Templates) 2 stellen eine bestimmte Zusammenstellung von definierten Platzhaltern (Fields) bspw. eines PDF-Dokuments dar. In der Kreuzschiene 16 werden die Verknüpfungen (Abbildungen) der Schablonen zu den richtigen Destinationen der entsprechenden Schnittstellen (Interfaces) definiert (oft als "Mapping" bezeichnet). Damit werden die Beziehungen der Schablonen 2 zu den Schnittstellen festgelegt. Zu einer Schablone 2 können mehrere Interfaces gehören. Bspw. kann eine Versicherung ihre Produkte mehreren unterschiedlichen Maklern zur Verfügung stellen. Diese haben in der Regel eine heterogene Umgebung, so dass mehrere, für diese Umgebungen spezifische Schnittstellen bereitgestellt werden müssen.

Die Schnittstellen (Interfaces) stellen die Anbindung des Schnittstellenmoduls an das Fremdsystem des Terminals sicher. Es gibt bspw. auf dem Versicherungsmarkt die unterschiedlichsten Systeme. Das Interface selbst wird bspw. von einem Maklerverwaltungsprogramm im Falle einer Versicherung zur Verfügung gestellt oder in Zusammenarbeit mit Softwarespezialisten aus dieser Firma erarbeitet. Die Maklerverwaltungsprogramme speisen diese Interfaces mit ihren Schnittstellen und lesen auch wieder die Daten daraus heraus, um sie dem Maklerverwaltungsprogramm (das gleiche gilt auch auf Versicherungsseite) zur Verfügung zu stellen.

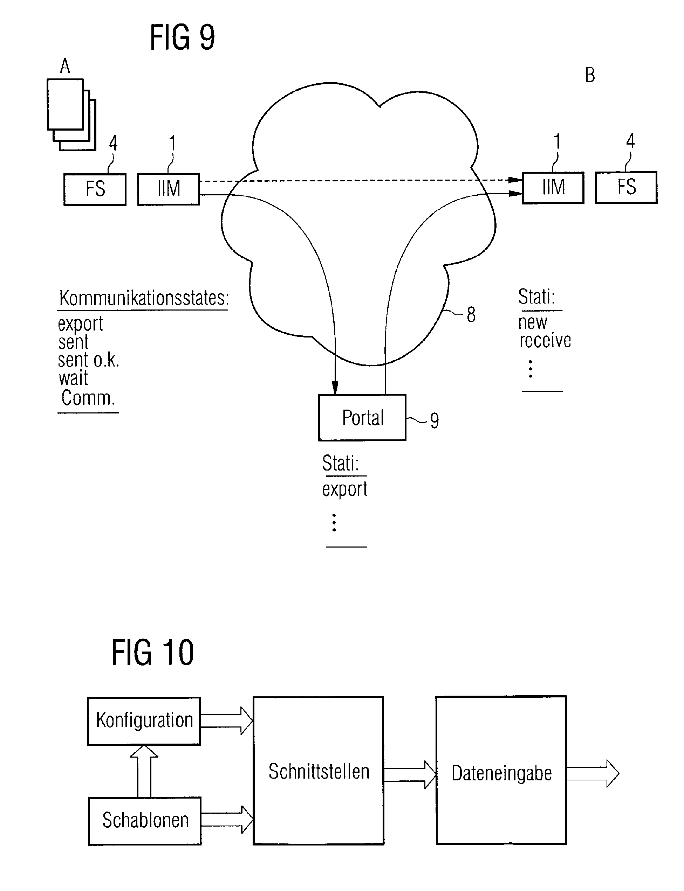

Einzelheiten der Implementierung des in Figur 8 illustrierten Ablaufs werden später bezugnehmend auf Figure 10 und 11 erläutert.

Die Merkmale und Eigenschaften der vorliegenden Erfindung lassen sich wie folgt zusammenfassen:
1. Das IIM 1 verbindet mehrere Computer (od. Hosts) zwecks Datenaustausch.
2. Der Datenaustausch erfolgt immer transaktionsbasiert (sichere Übertragung)
3. Sämtliche Transaktionen und Dokumenten können nach Belieben angezeigt werden (hier wird als Format bspw. der PDF Standard verwendet).
4. Starke Authentisierung (optional) und Datenverschlüsselung (optional) sind im IIM 1 bereits enthalten.
5. Das IIM 1 arbeitet nach dem Customer und Supplier Prinzip, dabei können Supplier und Customer völlig unterschiedliche EDV-Strukturen aufweisen
6. Zwischen Supplier und Customer können auf Wunsch automatisch neuere Versionen von Daten oder Dokumenten ausgeliefert werden (somit wird das Arbeiten mit den aktuellen Daten Dokumenten sicher gestellt).
7. Durch das Verbinden von Computer oder Hosts oder Applikationen mit einem IIM 1 mit der Aussenwelt, entsteht dem Benutzer dieser Schnittstelle eine 1^{∗}m Beziehung (ohne IIM sind es n=m Schnittstellen, d.h. der Benutzer muss nSchnittstellen implementieren)

Bezugnehmend auf Figur 9 soll nunmehr der Aspekt der vorliegenden Erfindung erläutert werden, dass sämtliche dokumentenbezogenen Datenübertragungen auf Transaktionsbasis erfolgen. In Figur 9 soll ein elektronischer Geschäftsprozess auf Dokumentenbasis zwischen einem Teilnehmer A und einem Teilnehmer B abgewickelt werden. Jeder der Teilnehmer A, B weist ein Schnittstellenmodul 1 auf, dass zwischen dem Terminal (Fremdsystem FS) 4 eines jeden Teilnehmers und dem Datennetz 8 geschaltet ist. Wie aus Figur 9 ersichtlich kann ein Datenaustausch entweder indirekt über den Plattform-Server 9 oder direkt zwischen den beiden Schnittstellenmodulen 1 erfolgen.

Der (indirekte) Datenaustausch mittels des Plattform-Servers kann als Sternmodell bezeichnet werde, bei dem ein großer Geschäftspartner oder eine Organisation (hier als "Parent & Master" bezeichnet) die Standards für seine Handelspartner wie z.B. verwendete Dokumentenformate und Austauschprotokolle vorgibt. Ein sogenanntes Repository (System zur Aufbewahrung von Quellen für Programme und Dokumenten), in der Praxis zumeist eine Datenbank, befindet sich also beim "Parent/Master", so daß sich die "Children" dort die benötigten Informationen beschaffen müssen.

Der direkte Austausch zweier Schnittstellenmodule dagegen ist eine Art "Ad Hoc"-Modell. Dabei richten die kleineren Geschäftspartner jeweils eigene, so genannte "Ad Hoc-Interaktionen" ein. Verschiedene Datenbanken/Repositories sind also nicht zentral bei einem Parent/Master abgelegt, sondern unter den Teilnehmern verteilt.

Die Datenübertragung mittels des Schnittstellenmoduls 1 gemäß der vorliegenden Erfindung, genauer gesagt die Datenübertragung von einem Schnittstellenmoduls 1 zu einem weiteren an das Datennetz 8 angebundenen Schnittstellenmodul 1 oder zu einem zentralen Portalserver, erfolgt auf Transaktionsbasis. Das heißt, Übertragungsdaten werden in Transaktionen zusammengefasst. Wenn bei der Übertragung der Daten einer Transaktion seitens des Empfängers ein Fehler festgestellt wird, werden sämtliche Daten einer Transaktion verworfen. Nur wenn sämtliche Daten einer Transaktion als fehlerfrei erkannt werden, übernimmt der Empfänger den Datensatz der Transaktion und schreibt ihn bspw. in seine Datenbank.

Transaktionen können dabei Daten bezüglich eines Dokuments, aber auch Daten bezüglich mehrerer Dokumente betreffen, wobei die Abfolge der mehreren Dokumente eine Geschäftsprozesseinheit des elektronischen Geschäftsprozesses darstellt. Insofern kann eine Transaktion auch eine Abfolge von hin- und herzusendenden Dokumenten umfassen. Für den Geschäftsprozess "Policierung", ein Beispiel aus dem Versicherungswesen, sind bspw. die Workflow-Schritte "Antrag" und "Policierung" notwendig, wobei diese Workflow-Schritte jeweils als Dokumente abgebildet sind. Die Kombination des in einer ersten Richtung zu übertragenden Dokuments "Antrag" und des zurückzusendenden Dokuments "Policierung" wird sinnvollerweise in einer Transaktion zusammengefasst.

Im übrigen hat jede Transaktion eine individuelle, sie kennzeichnende Transaktionsnummer.

In jedem Schnittstellenmodul 1 sowie ggf im Plattform-Server sind sogenannte Kommunikationsstati vorgesehen, die den Kommunikationszustand einer Transaktion wiedergeben. Senderseitig (Teilnehmer A) können diese Kommunikationsstati bspw. wie folgt lauten:
■ Export
■ Sent
■ Sent O.K.
■ Wait
■ Commit

Empfängerseitig (Plattform oder Teilnehmer B) können Sie entsprechend lauten:
■ New
■ Receive
■ Receive O.K.
■ Wait
■ Commit

Eine Transaktion wird verworfen, falls es bei einem dieser Kommunikationsstati zu einem Fehler kommt. Der Ablauf geht dann in einen definierten Zustand weiter. Beipielsweise kann der Ablauf senderseitig wieder zu dem Status "Send" zurückgehen. Wichtig ist indessen, dass empfängerseitig eine Übernahme der Nutzdaten nur dann erfolgt, wenn auch der letzte Kommunikationsstatus einer Transaktion als fehlerfrei beurteilt wurde.

Zur Verbindung heterogener Systeme beachtet die Software der Schnittstellenmodule 1 die folgenden Kriterien:
- Einfache und schnelle Implementation
- Flexible Schnittstelle
- In heterogenem Systemumfeld einsetzbar
- Einfach zu warten
- Erweiterbar
- Prozessorientiert
- Plausibilisierung der Daten
- Sicherheit
- Eigene Datenbank

Das Fremdsystem (Terminal 4) ist in der Regel mit mindestens einer der folgenden Schnittstellen bestückt:
- DB oder Excel Tabellen mit Zugriff über ODBC (Open Database Connectivity, datenbankunabhängige Schnittstelle) oder ADO (Abstraktes Datenobjekt),
- Strukturierte Daten (XML-Dateien),
- Flat-Files (Dateien, die ausschließlich direkt interpretierbare Daten enthalten),
- Eingabe durch den Sachbearbeiter bzw. Mitarbeiter. Der Import bzw. Export der Daten müsste über die Business Logik des ERP (Enterprise Ressource Planning, Softwarelösungen, die den betriebswirtschaftlichen Ablauf im Bereich Produktion, Vertrieb, Logistik, Finanzen, Personal usw., steuern und auswerten) gesteuert werden, welche der Datenbank übergeordnet ist.

Der Import bzw. der Export von Daten von einem Fremdsystem zu einem weiteren Fremdsystem kann über zwei verschiedene Kanäle durchgeführt werden. Beispiel: Der Export der Daten findet über einen ODBC-Zugriff statt, während das Importieren der Daten über ein Flat-File realisiert wird.

Figur 10 zeigt schematisch die interne Struktur der Datenbankschicht (13 in Fig. 5) eines Schnittstellenmoduls, aus der die Dokumentenverwaltung hervorgeht. Figur 11 stellt eines detaillierte funktionale Ansicht von Figur 11 dar. Es wird auch nochmals auf die entsprechende Illustration in Figur 8 zurückverwiesen.

Wie in Figur 10 ersichtlich, sind wesentliche Elemente der Datenbank- oder Dateischicht 13 gemäß einem Objekt-Modell:
- ein Konfigurierungsobjekt (entspricht dem Objekt "Interface Config" in Figur 5),
- ein Schablonenobjekt (entspricht dem Objekt "Documents Templates" in Figur 5), und
- ein Schnittstellen (Interface)-Objekt (entspricht dem Objekt "Interface Description" in Figur 5).

Das Konfigurierungsobjekt und das Schnittstellen-Objekt greifen dabei jeweils auf das Schablonenobjekt zu.

Details von Figur 10 sollen nunmehr bezugnehmend auf Figur 11 erläutert werden.

In dem Objekt "Flow" (entspricht dem Objekt "Documents State/Flow" in Figur 5) werden die kundenspezifischen Prozesse und deren Abhängigkeiten definiert. Dieses Objekt "Flow" wird konfiguriert, um die entsprechenden unternehmens- und/oder branchenspezifischen Geschäftsprozesse und deren Abläufe abzubilden. In dem Objekt "Flow" ist auch niedergelegt, ob und ggf. innerhalb welcher Zeitspanne nach dem Versenden von Daten Rückantworten (bzw. deren Typ und Inhalt) erwartet werden.

Das Objekt "Product Definition" ist die Kreuzschiene der Dokumentenschablonen. Abhängig von den Parametern "Service Type" (Dienstleistung), "Supplier", "Product Type" und "Flow" wird die zugehörige Schablone zugeordnet. Ein Beispiel für eine Produktdefinition ("Product Definition") ist beispielsweise ein Antrag für eine Kfz-Haftpflichtversicherung ("Product Type") einer vorbestimmten Versicherung (Supplier).

In der "Access List" wird festgelegt welcher Kunde (Customer) welches Produkt (gemäß Produktdefinition) handhaben darf.

Die Produktdefinition kann auch ein Teilprodukt betreffen. Wenn beispielsweise das Gesamtprodukt die Kfz-Haftpflichtversicherung sein soll, können Teilprodukte "Antrag neu", "Antragspolicierung" oder "Schadenmeldung" sein. Bestimmten Kunden (Customern) können somit auch nur Teilprodukte des Gesamtprodukts zugänglich gemacht werden.

Die Schablonen weisen Platzhalter ("Fields" oder "T-Fields") für mögliche Nutzdaten auf (siehe auch Figur 8).

"T-Fields" in Figur 11 stellen die einzelnen Platzhalter dar. Templates umfassen mehrere Platzhalter (T-Fields) unter einer Bezeichnung zusammen. "Template Doc" ("T-Doc") in Figur 11 ist dabei eine Standard-Formatvorlage für ein Formular. Im einfachen Fall ist die "T-Doc" gleich einem (Teil-)Produkt definiert. Dies ist beispielsweise der Fall, wenn bekannte Formulare von Versicherungen "1 zu 1" elektronisch übersetzt werden Das Teilprodukt "Antrag neu" kann dann bspw. genau einem bestimmten Formular entsprechen. Eine "T-Doc" kann aber allgemein auch aus mehreren Schablonen ("Templates") bestehen. Dies ist bspw. der Fall, wenn für ein Teilprodukt mehrere Formulare benötigt werden.

Mittels der "T-Doc-Definition" kann ein dynamisches Nachladen gemäß vorbestimmter Kriterien (Anzahl der Versicherten, etc.) von Schablonen ermöglicht werden. Durch mehrfaches Nachladen von Schablonen kann somit mittels einer verhältnismäßig einfachen Definition auch ein größerer Umfang der Schablonen erreicht werden. Dies wird bspw. benötigt wenn das Grundformular für eine maximale Anzahl von Versicherten ausgelegt ist und mittels ggf. mehrfachen dynamischen Nachladen einer Schablone weitere zu versichernde Personen anzugeben sind.

In der "Interface Description" werden die Meta-Daten des Fremdsystems, wie bspw. des lokalen Makler-Verwaltungsprogramms abgelegt. In der "I-List" werden die verschiedenen Platzhalter ("T-Fields") "referenziert". In der "I-List" werden somit die tatsächliche Behandlung und Verwertung der Platzhalter ("T-Fields") für die Bedürfnisse des Fremdsystems festgelegt.

Transaktionen werden in "Docs" definiert. Mittels der "Docs" werden die Daten bestimmten Teilprodukten ("Product Definition") zugeordnet.

## Patentansprüche

1. Schnittstellenmodul zur Durchführung von elektronischem Geschäftsverkehr auf Transaktionsbasis, wobei
- das Schnittstellenmodul (1) zwischen einem Terminal (4) und einem Datennetz (8), wie bspw. dem Internet geschaltet ist und
- ein Modul (1, 3) zur Visualisierung (14) und Überwachung des Nutzdatenflusses (5, 6) von bzw. zu dem Terminal (4) aufweist, wobei das Visualisierungsmodul auf Schablonen (12) zugreift, um mit deren Hilfe die übertragenen Nutzdaten als Dokumente zu visualisieren.

2. Schnittstellenmodul nach Anspruch 1,
**dadurch gekennzeichnet,**
**dass** ausgetauschte Nutzdaten mittels einer Interpreteranwendung (10) als Dokument auf einem Monitor (14) darstellbar sind.

3. Schnittstellenmodul nach einem der vorhergehenden Ansprüche,
**gekennzeichnet durch** Mittel (3) zur manuellen und/oder automatischen Freigabe und/oder Selektion der Übertragung (5, 6) von visualisierten Nutzdaten zu bzw. von dem Terminal (4).

4. Schnittstellenmodul nach Anspruch 3,
**gekennzeichnet durch**
Mittel (3) zur Selektion von zu übertragenden Nutzdaten (5, 6) für eine folgende Übergabe zu dem Terminal (4) und/oder einer Adresse in dem Datennetz (8).

5. Schnittstellenmodul nach Anspruch 4,
**dadurch gekennzeichnet,**
**dass** die Selektion anhand einer Visualisierung (14) der zu übertragenden Nutzdaten als Dokument erfolgt.

6. Schnittstellenmodul nach einem der vorhergehenden Ansprüche,
**dadurch gekennzeichnet,**
**dass** es ausgehend von einer zentralen Intelligenz (9) in dem Datennetz (8) konfigurierbar ist.

7. Schnittstellenmodul nach einem der vorhergehenden Ansprüche,
**dadurch gekennzeichnet,**
**dass** es ein Dateisystem (2) aufweist, in dem ein Workflow eines Geschäftsprozesses, der mittels eines Nutzdatenaustauschs über das Schnittstellenmodul (1) abgewickelt werden soll, mittels Schablonen (12) abgebildet ist.

8. Schnittstellenmodul nach Anspruch 7,
**dadurch gekennzeichnet,**
**dass** die Schablonen (12) von einer zentralen Intelligenz (9) in dem Datennetz (8) aus in das Dateisystem (2) eingegeben bzw. modifiziert werden können.

9. Schnittstellenmodul nach einem der Ansprüche 6 bis 8,
**dadurch gekennzeichnet,**
**dass** bei einer Änderung der Konfiguration des Schnittstellenmoduls (1) automatisch Parameter von davon betroffenen Prozessen des mittels Schablonen (12) abgebildeten Workflows anpassbar sind.

10. Schnittstellenmodul nach einem der Ansprüche 6 bis 9,
**dadurch gekennzeichnet,**
**dass** Schablonen und/oder ein vollständiger Workflow mittels einer Mappingeinheit (16) mit vorbestimmten Destinationen in dem Datennetz (8) koppelbar sind.

11. Computer-Softwareprogramm,
**dadurch gekennzeichnet,**
**dass** es in dem auf einen Rechner geladenen Zustand ein Schnittstellenmodul (1) nach einem der vorhergehenden Ansprüche implementiert.

12. Verfahren zur Durchführung von elektronischem Geschäftsverkehr auf Dokumentenbasis, wobei ein Schnittstellenmodul (1) zwischen einem Terminal (4) und einem Datennetz (8), wie bspw. dem Internet geschaltet ist,
**gekennzeichnet durch**
den Schritt der Visualisierung (14) und Überwachung des Nutzdatenflusses (5, 6) von bzw. zu dem Terminal (4) als Dokumente **durch** Interpretation der Nutzdaten mittels in dem Schnittstellenmodul (1) abgelegter Schablonen.

13. Verfahren nach Anspruch 12,
**dadurch gekennzeichnet,**
**dass** die ausgetauschten Nutzdaten auf einem Monitor (14) mittels einer Interpreteranwendung (10) als Dokument dargestellt werden.

14. Verfahren nach Anspruch 12 oder 13,
**gekennzeichnet durch**
den Schritt (3) der manuellen und/oder automatischen Freigabe und/oder Selektion der Übertragung (5, 6) von visualisierten Nutzdaten.

15. Verfahren nach Anspruch 14,
**gekennzeichnet durch**
den Schritt (3) der Selektion von übertragenden Nutzdaten (5, 6) für eine folgende Übergabe.

16. Verfahren nach Anspruch 15,
**dadurch gekennzeichnet,**
**dass** die Selektion anhand einer Visualisierung (14) der zu übertragenden Nutzdaten als Dokument erfolgt.

17. Verfahren nach einem der Ansprüche 12 bis 16,
**dadurch gekennzeichnet,**
**dass** das Schnittstellenmodul (1) ausgehend von einer zentralen Intelligenz (9) in dem Datennetz (8) konfiguriert wird.

18. Verfahren nach einem der Ansprüche 12 bis 17,
**dadurch gekennzeichnet,**
**dass** ein Workflow eines Geschäftsprozesses, der mittels Nutzdatenaustausch über das Schnittstellenmodul (1) abgewickelt werden soll, mittels Schablonen in einem Dateisystem (2) abgebildet wird.

19. Verfahren nach Anspruch 18,
**dadurch gekennzeichnet,**
**dass** die Schablonen (12) von einer zentralen Intelligenz (9) in dem Datennetz (8) aus in das Dateisystem (2) eingegeben und/oder modifiziert werden können.

20. Verfahren nach einem der Ansprüche 17 bis 19,
**dadurch gekennzeichnet,**
**dass** bei einer Änderung der Konfiguration des Schnittstellenmoduls (1) automatisch Parameter von davon betroffenen Prozessen des mittels Schablonen (12) abgebildeten Workflows angepasst werden.

21. Verfahren nach einem der Ansprüche 17 bis 20,
**dadurch gekennzeichnet,**
**dass** Schablonen (12) mittels einer Mapping-Einheit (16) mit vorbestimmten Destinationen in dem Datennetz (8) gekoppelt werden.

22. Computer-Softwareprogramm,
**dadurch gekennzeichnet,**
**dass** es in dem auf einen Rechner geladenen Zustand ein Verfahren nach einem der Ansprüche 12 bis 21 implementiert.

23. Schnittstellenmodul zum Visualisieren des Datenflusses (5, 6) zwischen einem Terminal (4) und einem Datennetz (8), wie bspw. dem Internet, aufweisend:
- eine Monitoring-Ebene (3) zur Visualisierung und Überwachung des Nutzdatenflusses (5, 6) von bzw. zu dem Terminal (4),
- eine Logikebene (11) zur Interpretation, Konvertierung und Übergabe von Daten zum Terminal (4) und Datennetz (8), und
- eine Dateiebene (13), in der Schablonen (12) abgelegt sind, wobei
- eine Interpreteranwendung (10) ein- und/oder ausgehende Nutzdaten der Logikebene (11) mittels dieser Schablonen (12) für die Visualisierung der Nutzdaten in Form von Dokumenten verarbeitet.

24. Schnittstellenmodul nach Anspruch 23,
**dadurch gekennzeichnet,**
**dass** in der Business-Schicht (14) ein Workflow mittels einer vorgegebenen Dokumentenabfolge abgebildet ist.

25. Schnittstellenmodul nach Anspruch 23 oder 24,
**dadurch gekennzeichnet,**
**dass** die Möglichkeit einer Fernwartung des Schnittstellenmoduls (1) mittels Zugriff auf die Business-Schicht (14) vorgesehen ist.

26. Schnittstellenmodul nach einem der Ansprüche 23 bis 25,
**dadurch gekennzeichnet,**
**dass** die Business-Schicht (14) weiterhin eine Datenkonvertierungsfunktion aufweist.

27. Schnittstellenmodul nach einem der Ansprüche 23 bis 26,
**dadurch gekennzeichnet,**
**dass** die Business-Schicht (14) die Funktion einer Benutzer-Zugriffssteuerung aufweist.

28. Schnittstellenmodul nach einem der Ansprüche 23 bis 27,
**dadurch gekennzeichnet,**
**dass** die Dateiebene (13) eine Funktion zur Unterscheidung von Prozess-Nutzdaten, Datenhaltung und Konfigurationsdaten aufweist.

29. Schnittstellenmodul nach einem der Ansprüche 23 bis 28,
**dadurch gekennzeichnet,**
**dass** es mit einer Datenbank (14) verbunden ist, in der Nutzdaten abgelegt sind.

30. Schnittstellenmodul nach einem der Ansprüche 23 bis 29,
**dadurch gekennzeichnet,**
**dass** es mit einer Datenbank (14) verbunden ist, in der Schablonen (12) des Schnittstellenmoduls (12) mittels einer Mappingeinheit (16) mit vorbestimmten Destinationen in dem Datennetz (8) gekoppelt sind.

31. System zur Durchführung von auf Dokumentenaustausch basierten elektronischen Geschäftsprozessen,
**dadurch gekennzeichnet,**
**dass** es wenigstens zwei Schnittstellenmodule (1) gemäß einem der Ansprüche 24 bis 31 aufweist, die mittels eines Datennetzes miteinander kommunizieren.

32. Computer-Softwareprogramm,
**dadurch gekennzeichnet,**
**dass** es in dem auf einen Rechner geladenen Zustand ein Schnittstellenmodul (1) nach einem der Ansprüche 23 bis 31 implementiert.
